# EUROPEAN PATENT APPLICATION

(11) **EP 2 658 071 A2**
(43) Date of publication of application: **30.10.2013**
(21) Application number: 13156217.5
(22) Date of filing: 21.02.2013
(51) Int. Cl.: H02J 3/38

(54) **A cascaded multilevel inverter and method for operating photovoltaic cells at a maximum power point**

(30) Priority: 27.04.2012 US 201213457921
(71) Applicant: Delphi Technologies, Inc., Troy, MI 48007 (US)
(72) Inventor: Kepley, Kevin P., Manchester, MO Missouri 63021 (US)
(74) Representative: Neill, Andrew Peter

(57) **Abstract**

A method (300) of operating a cascaded multilevel inverter (30) of photovoltaic system (10) to transfer electrical power from a plurality of photovoltaic cells (16, 18, 20) onto an electrical power distribution grid (12). Power switches (32, Q1, Q2, Q3, Q4) in the inverter are operated in a manner effective to combine a block voltage (V1, V2, Vn) output from each selected photovoltaic blocks series-wise to output an inverter voltage (IV) substantially equal to the grid voltage (GV). A selected photovoltaic block may be pulse width modulated to adjust incrementally a current or voltage output by the system (10). The photovoltaic blocks selected to contribute to the current or voltage output by the system are selected based on a desire to operate solar panels formed by the photovoltaic cells at a maximum power point (MPP) of each solar panel (28) in a photovoltaic block. Shuffling of which blocks are selected may occur at any time during synthesizing a sinusoidal output signal.

## Description

### TECHNICAL FIELD OF INVENTION

This disclosure generally relates to operating a cascaded multilevel inverter to transfer electrical power from a plurality of photovoltaic cells forming solar panels, and more particularly relates to operating each those solar panels at a maximum power point.

### BACKGROUND OF INVENTION

A paper entitled Multilevel DC-AC Converter Interface with Solar Panels written by Yue Cao, and published in the Spring 2010 edition of Pursuit: The Journal of Undergraduate Research by the University of Tennessee describes a way to operate an inverter that includes five photovoltaic blocks, where each photovoltaic block includes a solar panel and an H-bridge switch. The outputs of the photovoltaic blocks are sequentially combined series-wise in a predetermined order to synthesize a sinusoidal waveform output by the inverter. While maximum power point tracking (MPPT) of the inverter as a whole in considered, the paper never considers tracking MPPT for each individual photovoltaic block, and so is unable to compensate for unequal illumination of the respective solar panels. Furthermore, by combining the outputs of the photovoltaic blocks in a predetermined order, one of the photovoltaic blocks is always burdened with outputting more power than another photovoltaic block. This unequal power draw can cause undesirable operation of the photovoltaic block at a power point that is not at the maximum power point of the solar panel.

Another paper entitled 11-Level Cascaded H-bridge Grid-tied Inverter Interface with Solar Panels written by Faete Filho et al., and published February 2010 in Applied Power Electronics Conference and Exposition (APEC) by the IEEE describes an improvement to the inverter described in above paper where the last photovoltaic block added to the series-wise combination of photovoltaic blocks is pulse width modulated to compensate for variations in illumination levels to the collective solar panels. However, this inverter suffers from the same deficiencies described above with regard to being unable to compensate for unequal illumination of the respective solar panels, and not operating each solar panel at a maximum power point of the solar panel.

Another paper entitled Real Time Selective Harmonic Minimization for Multilevel Inverters Connected to Solar Panels Using Artificial Neural Network Angle Generation written by Faete Filho et al., and published September 2010 in Energy Conversion Congress and Exposition (ECCE) by IEEE describes using Artificial Neural Networks (ANN) to generate the switching angles for the same inverter described in the previous two papers in order to reduce certain harmonic noise. Using artificial neural network algorithms may help avoid using undesirably complicated controllers having extensive processing capability, but it does not address problems with the inverter described in this paper that are the same inverter deficiencies described above for the other papers.

### SUMMARY OF THE INVENTION

In accordance with one embodiment, a method of operating a cascaded multilevel inverter to transfer electrical power from a plurality of photovoltaic cells onto an electrical power distribution grid is provided. One or more of the plurality of photovoltaic cells is coupled to one of a plurality of power switches to form a plurality of photovoltaic blocks. The plurality of power switches are interconnected such that a block voltage output by each photovoltaic block can be selectively combined series-wise to generate an inverter voltage corresponding to a grid voltage of the electrical power distribution grid. The method includes the step of determining a power rating for each of the plurality of photovoltaic blocks. The method also includes the step of selecting a combination of photovoltaic blocks based on the power ratings. The method also includes the step of operating the plurality of power switches in a manner effective to combine the block voltage output from each of the selected photovoltaic blocks series-wise to output an inverter voltage substantially equal to the grid voltage.

In another embodiment, a cascaded multilevel inverter is provided. The inverter is configured to transfer electrical power from a plurality of photovoltaic cells onto an electrical power distribution grid. The inverter includes a plurality of power switches and a controller. Each power switch of the plurality of power switches is configured to be coupled to one or more of a plurality of photovoltaic cells to form a plurality of photovoltaic blocks. The plurality of power switches are interconnected such that a block voltage output by each photovoltaic block can be selectively combined series-wise to generate an inverter voltage corresponding to a grid voltage of the electrical power distribution grid. The controller includes an input configured to receive signals effective to determine a power rating for each of the plurality of photovoltaic blocks, a processor configured to select a combination of photovoltaic blocks based on the power ratings, and an output configured to send signals effective to operate the plurality of power switches in a manner effective to combine the block voltage output by each of the selected photovoltaic blocks series-wise to output an inverter voltage substantially equal to the grid voltage.

In yet another embodiment, a photovoltaic system is provided. The system is configured to transfer electrical power onto an electrical power distribution grid. The system includes a plurality of photovoltaic cells, a plurality of power switches, and a controller. Each power switch of the plurality of power switches is configured to be coupled to one or more of a plurality of photovoltaic cells to form a plurality of photovoltaic blocks. The plurality of power switches are interconnected such that a block voltage output by each photovoltaic block can be selectively combined series-wise to generate an inverter voltage corresponding to a grid voltage of the electrical power distribution grid. The controller includes an input configured to receive signals effective to determine a power rating for each of the plurality of photovoltaic blocks, a processor configured to select a combination of photovoltaic blocks based on the power ratings, and an output configured to send signals effective to operate the plurality of power switches in a manner effective to combine the block voltage output by each of the selected photovoltaic blocks series-wise to output an inverter voltage substantially equal to the grid voltage.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a photovoltaic system in accordance with one embodiment;
Fig. 2 is a diagram of a photovoltaic block use in the photovoltaic system of Fig. 1 in accordance with one embodiment;
Fig. 3 is a flowchart of a method executed by the system of Fig. 1 in accordance with one embodiment;
Fig. 4 is a graph of signals present in the system of Fig. 1 in accordance with one embodiment;
Fig. 5 is a graph of signals present in the system of Fig. 1 in accordance with one embodiment; and
Fig. 6 is a graph of signals present in the system of Fig. 1 in accordance with one embodiment.

### DETAILED DESCRIPTION

Described herein is a way to control a cascaded multilevel inverter that draws power from a plurality of photovoltaic cells that are typically interconnected to form solar panels. As used herein, the term solar panel includes instances where multiple panels are connected in parallel. An example of a suitable solar panel is the model MTPV-245 from Motech Industries, located in Tainan, Taiwan.

It is preferable that the amount of power drawn from each solar panel is varied based on a desire for maximum power point tracking of each solar panel. As will become apparent in the description that follows, the order and duration that power is drawn from each of the solar panels is advantageously varied or shuffled to optimize the power output by each photovoltaic block (a combination of the solar panel and a power switch that regulates power output by the solar panel) and thereby control the power drawn from each solar panel closer to a maximum power point of each solar panel.

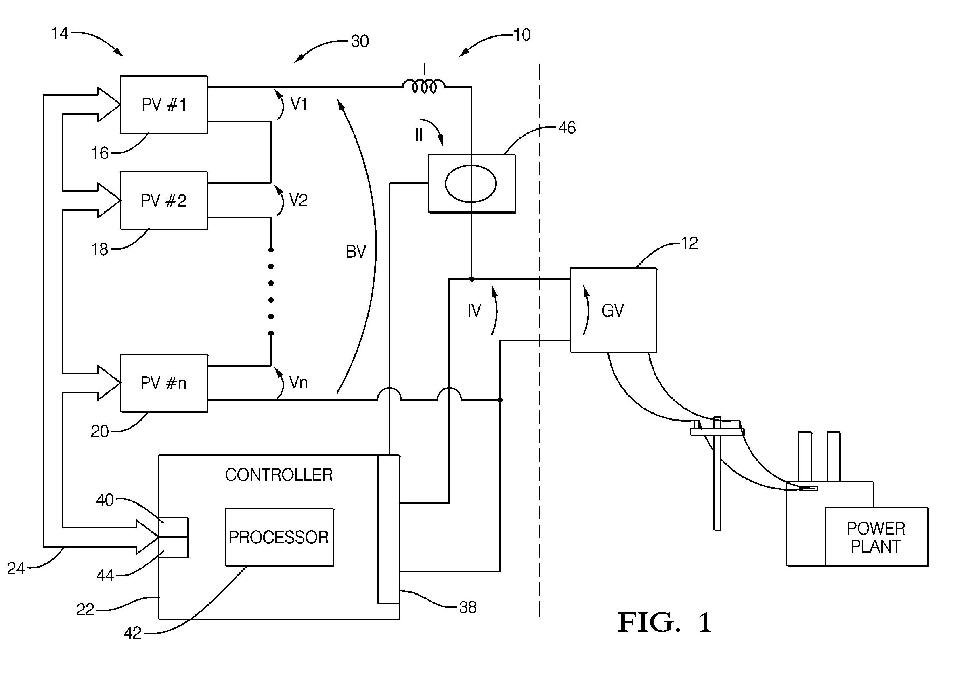

Fig. 1 illustrates a non-limiting example of a photovoltaic system 10, hereafter the system 10. The system 10 is generally configured to produce electrical power and transfer that electrical power onto an electrical power distribution grid, hereafter the grid 12. As used herein, and by way of example and not limitation, the electrical power distribution grid or the grid 12 may be a power distribution network such as would be used to convey electrical power from a power company to a home or business. For this non-limiting example, the system 10 'back-feeds' electrical energy to the grid 12 so homes or business connected to the grid 12 are provided with a combination of electrical energy produced by the power company and electrical energy produced by the system 10. Alternatively, the grid 12 may be a device that consumes electrical energy, for example a light bulb or refrigerator. For this non-limiting example the system 10 may be more accurately characterized as a stationary power source.

The system 10 may include a plurality of photovoltaic blocks, hereafter PV blocks 14, for example a first PV block 16 (PV#1), a second PV block 18 (PV#2), a last PV block 20 (PV#n), and any number of PV blocks between PV#2 and PV#n as suggested by the illustration. Each PV block is configured to operate in at least a connected mode where the PV block outputs electrical energy that may be characterized as a block voltage (V1, V2 ... Vn), or operate in a bypass mode where the connections used to output the block voltage are shorted together. For the purpose of modeling, the bypass mode could be modeled as a voltage source outputting zero volts.

By individually operating each of the plurality of PV blocks 14 to the connected mode or the bypass mode, the block voltages available from each PV block can be combined or bridged together in a series-wise fashion to output a bridge voltage BV effective to, depending on the load presented by the grid 12, control an inverter current II or control an inverter voltage IV to a desired value. As will be explained in more detail below, the selection of which of the PV blocks is operated to the connected mode and which of the PV blocks is operated to the bypass mode may be performed by a controller 22 exchanging control signals 24 with the plurality of PV blocks 14. The exchange of the control signals 24 is done in order to generate the desired inverter voltage IV and/or inverter current II, and so each of the solar panels being drawn upon are operated at a rate (i.e. - power point or power rate) approximately equal a maximum power point of the solar panel. The combination of the plurality of PV blocks minus the PV cells inside the PV blocks, plus the controller 22 generally defines a cascaded multilevel inverter, hereafter inverter 30. As will become apparent in the description that follows, the inverter 30, and the system 10 are distinguished from the prior art by how each of the solar panels are operated at a rate approximately equal the maximum power point of the individual solar panels.

While the system 10 is illustrated to suggest that it produces single phase power, it is recognized that the teachings herein are applicable to producing multi-phase power. In the instance where the system 10 is back-feeding a power distribution network, it is appreciated that the inverter voltage IV output by the system 10 needs to correspond to, or be substantially equal to, a grid voltage GV of the grid 12. In the instance where the system 10 is operating as a stationary power supply, the controller 22 may include an internal signal generator (not shown) that outputs a signal corresponding to a typical grid voltage signal. Whether the bridge voltage BV and/or the inverter voltage IV is controlled based on the grid voltage GV or a signal generated within the controller 22, a typical signal may be characterized as a sinusoidal waveform.

The system 10 or inverter 30 may include an inductor I to smooth current output to the grid 12. The inductance value of the inductor will be selected based on known factors such as a pulse width modulation (PWM) frequency used to control bridge voltage output by the PV blocks, and a grid frequency. By way of example and not limitation, the system 10 operates at a PWM frequency of 5.6kHz to about 11kHz. A suitable value for the inductor I is 2.5mH. Fluctuations of current may arise if one or more of the plurality of PV blocks 14 is being pulse-width-modulated in order to output a particular bridge voltage or inverter voltage IV, and these fluctuations may be detected by a current sensor 46 configured to measure inverter current II. The current sensor 46 may be a Hall effect type current sensor, or other known current sensing technology. It will be recognized by those in the art that the bridge voltage BV arising from the series-wise combination of PV blocks will need to phase-wise lead the grid voltage GV by an amount that causes current through the inductor I to keep the inverter voltage IV cooperatively or substantially in phase with the grid voltage GV. Typically, the inverter voltage IV has a sinusoidal waveform with a frequency of, for example, fifty to sixty Hertz (50-60Hz) waveform.

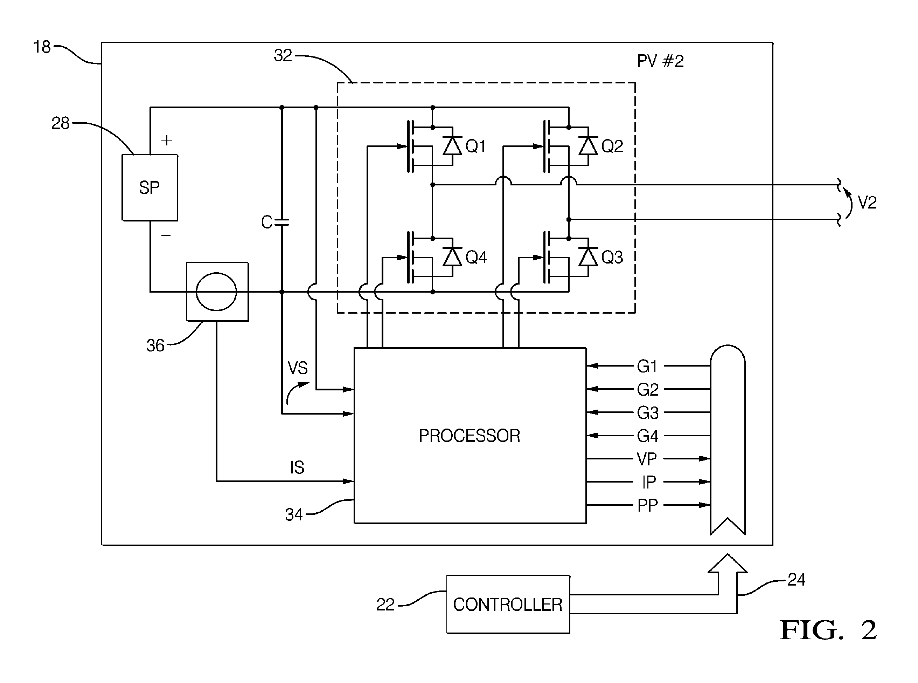

Fig. 2 illustrates a non-limiting example of one of the plurality of PV blocks 14, for example, the second PV block 18 (PV#2). The second PV block 18 includes a plurality of photovoltaic cells that may be interconnected an arranged in a manner known in the art to form a solar panel 28 (SP). The solar panel 28 may be connected to the inverter 30 by way of a wire harness or cable (now shown) so the solar panel 28 can be oriented to face the sun (not shown). In some configurations of the system 10, a distinct solar panel may be connected to each separate PV block (16, 18, 20). When the solar panel 28 is adequately illuminated, it typically generates a direct current type voltage designated herein as a solar panel voltage VS having a polarity corresponding to the polarity indicators illustrated.

The solar panel voltage VS output by the solar panel 28 may be coupled to a capacitor C for storing charge output by the solar panel 28, and/or filtering noise. The capacitor C may be located proximate to the solar panel SP, or may be located proximate to the inverter 30, for example in a housing (not shown) enclosing the inverter 30. The capacitance value of the capacitor C will be selected based on known factors such the frequency used to pulse width modulate the PV blocks. A suitable capacitance value for the system 10 or inverter 30 describe herein is 2200uF. It should be appreciated that because the system 10 pulse width modulates and shuffles the PV blocks in order to draw power from the PV blocks at a rate near the maximum power point (MPP) of each solar panel (28), a smaller capacitance value is required when compared to systems that combine the outputs of the PV blocks in some predetermined order, and/or do not pulse width modulate or shuffle the PV blocks. If, for example, too much power is drawn from a PV block so that the PV block is operating at a power point less than the MPP, then by shuffling the PV blocks, that particular PV block can 'rest' and recharge the capacitor C.

The second PV block 18, as well as any other PV blocks (16, 20), may include a plurality of power switches (Q1, Q2, Q3, Q4), hereafter the power switch 32. The plurality of power switches may each be a metal oxide semiconductor field effect transistor (MOSFET), an insulated gate bi-polar transistor (IGBT), or other device known in the art suitable for switching the voltage and current levels presented. The power switch 32 is configured to selectively couple the solar panel 28 to the output of the PV block and thereby control the value of V2. In this non-limiting example, the power switches are arranged in an 'H-bridge' configuration. Each of the power switches is operable to an on-state (Qn:on), or an off-state (Qn:off), as is known in the art. As such, the power switch 32 is operable to a bypass state where the block voltage output by the corresponding PV block does not contribute to the inverter voltage. While a power switch is in a bypass state, the corresponding PV block is characterized as being operated in the bypass mode. The bypass state or bypass mode may be established by operating the power switches to [Q1:on, Q2:on, Q3:off, and Q4:off] or [Q1: off, Q2: off, Q3: on, and Q4: on].

The power switch 32 is also operable to connected state corresponding to a connected mode for the PV block where the block voltage (V2) output by the corresponding photovoltaic block (PV#2) contributes to the bridge voltage BV. In one instance of the connected state or connected mode, the power switch 32 may be operated to [Q1:on, Q2:off, Q3:on, and Q4:off] so that the block voltage is a positive voltage nominally equal in magnitude to the voltage output by the solar panel 28. In another instance, the power switch 32 may be operated to [Q1:off, Q2:on, Q3:off, and Q4:on] so that the block voltage is a negative voltage nominally equal in magnitude to the voltage output by the solar panel 28. The power switch 32 may also be pulse-width-modulated between various states to incrementally adjust the bridge voltage BV influence on the inverter voltage IV. As such, the plurality of power switches are interconnected such that a block voltage (V1, V2, ...Vn) output by each photovoltaic block (PV#1, PV#2, ...PV#n) can be selectively combined series-wise to generate an inverter voltage IV corresponding to a grid voltage VG of the electrical power distribution grid 12 or a reference signal within the controller 22.

Continuing to refer to Fig. 2, the second PV block 18, as well as any other PV blocks (16, 20), may include a processor 34. The processor 34 may include a microprocessor or other control circuitry as should be evident to those in the art. The processor 34 may include memory, including non-volatile memory, such as electrically erasable programmable read-only memory (EEPROM) for storing one or more routines, thresholds and captured data. The one or more routines may be executed by the processor 34 to perform steps for operating the power switch 32, or communicating information about the second PV block 18 to the controller 22. The processor 34 may be configured to receive control signals 24 from the controller 22, for example gate control signals g1,g2,g3,g4. The processor 34 may also be configured to level-shift and/or amplify those gate control signals to a level suitable to control the power switches Q1, Q2, Q3, Q4. The processor 34 may also be configured to receive a solar panel current signal IS from a current sensor 36 in order to determine a solar panel current value IP, receive a solar panel voltage signal VS from the solar panel 28 in order to determine a solar panel voltage value VP, and communicate the solar panel current value IP and the solar panel voltage value VP to the controller 22. By providing the solar panel current value IP and the solar panel voltage value VP to the controller 22, the system 10, and inverter 30 are able to operate each of the solar panels at or near their maximum power point (MPP).

Referring again to Fig. 1, the controller 22 may include a processor 42 such as a microprocessor or other control circuitry as should be evident to those in the art. The controller 22 may include memory (not shown, possibly part of the processor 42), including non-volatile memory, such as electrically erasable programmable read-only memory (EEPROM) for storing one or more routines, thresholds and captured data. The one or more routines may be executed by the processor 42 to perform steps for determining if signals received by the controller 22 for operating or controlling the plurality ofPV blocks 14 as described herein. The controller 22 may include an input 38 configured to, for example, monitor the inverter voltage IV (i.e. the grid voltage GV) and the inverter current II indicated by the current sensor 46, and/or an input 40 configured to receive signals for the processor 42 that may be effective or useful to determine a power rating for each of the plurality of PV blocks 14. By monitoring the inverter current II with the current sensor 46, the system 10 or inverter 30 is able to adjust the bridge voltage BV in order to control the inverter current II or the grid voltage GV. The controller 22 or the processor 42 is generally configured to select a combination of the plurality of photovoltaic blocks (the PV blocks 14) based on the power ratings. As such, the controller 22 may include an output 44 configured to send signals (g1, g2, g2, g4) effective to operate the plurality of power switches (the power switch 32) in a manner effective to combine the block voltages (V1, V2, ...Vn) output by each of the selected photovoltaic blocks series-wise to output a bridge voltage BV and thereby influence the inverter voltage IV to be substantially equal to, or correspond with, the grid voltage GV, and control the inverter current II to maintain power draw from the PV blocks 14 substantially at their maximum power points.

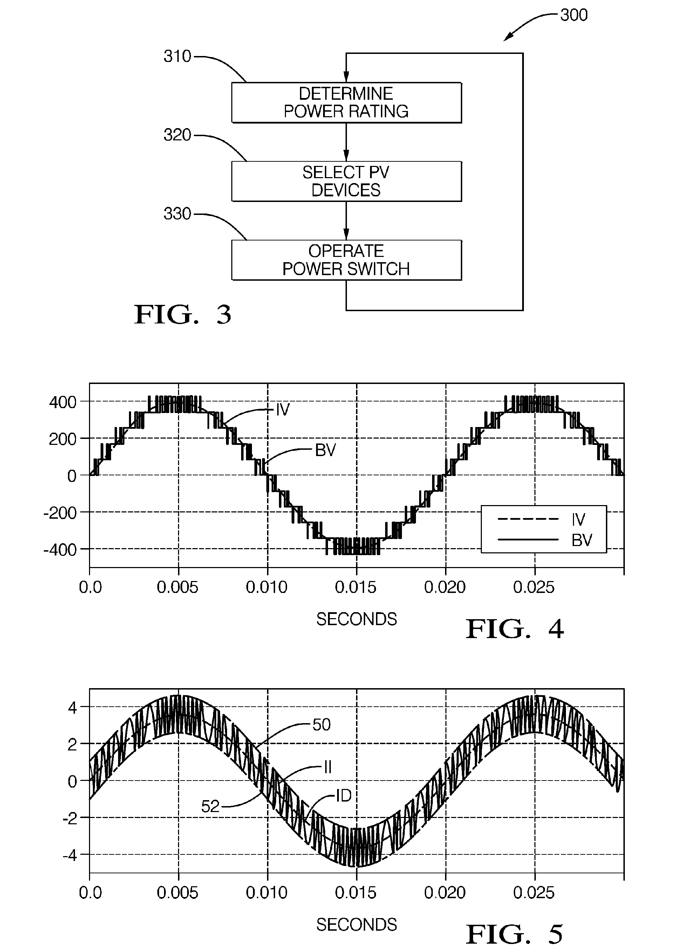

Fig. 3 illustrates a non-limiting example of a method 300 of operating the cascaded multilevel inverter (the inverter 30) to transfer electrical power from a plurality of photovoltaic cells forming a plurality of solar panels (e.g. the solar panel 28) onto an electrical power distribution grid 12, as described above and reviewed here. Each solar panel 28 is typically coupled to one of a plurality of power switches (the power switch 32) to form a plurality of photovoltaic blocks (the PV blocks 14). The power switches are interconnected such that a block voltage (e.g. V1, V2, ...Vn) output by each photovoltaic block can be selectively combined or bridged together series-wise to generate a bridge voltage BV that influences an inverter voltage IV to correspond to a grid voltage GV of the electrical power distribution grid 12.

Step 310, DETERMINE POWER RATING, may include determining a power rating for each of the PV blocks 14, in particular determining a maximum power point (MPP) of a photovoltaic block. By way of example and not limitation, the controller 22 may periodically note or record the solar panel current value IP and the solar panel voltage value VP of a particular PV block, and calculate a power output value PP (e.g. a product of IP and VP) for each IP and VP pair. Alternatively, the processor 34 may calculate and output the power output value PP. If the power output value PP decreases from a prior power output value, then that may be an indication that the power usage is moving away from a maximum power point (MPP) of the particular PV block. Contrariwise, if the power output value PP increases from a prior power output value, then that may be an indication that the power usage is moving toward a maximum power point (MPP) of the particular PV block. Other algorithms for determining the MPP of a PV block are known in the art. Accordingly, determining an operating point change (i.e. a change in power usage or change in the power output value PP) can be used to determine an MPP of a PV block. By way of another example, the MPP of a PV block may be determined by noting the open circuit voltage (i.e. VP when IP = 0 or VP(IP=0)) of the solar panel 28, and then calculating the MPP to be that when VP(MPP) is equal to one-half of VP(IP=0).

Step 310 may also include ranking each of the plurality of the PV blocks 14 (PV#1, PV#2,...PV#n) according to the present instantaneous power rating of each PV block. By ranking the PV blocks 14, it can be determined which of PV blocks can preferably be drawn upon without driving the operating point too far away from the MPP of the PV block. For example, if the VP of a particular PV cell, PV#2 for example, is below the VP(MPP), or the most recent power output value PP indicates that the operating point of PV#2 is below the MPP, then it may be preferable to not use PV#2 in an upcoming PWM cycle to series-wise contribute to generating the bridge voltage BV. It should be recognized that PV#2 may be operating below the MPP either because it has recently been excessively drawn upon to contribute to generating the inverter voltage IV, or is not receiving adequate illumination or sunlight. In the case of the former, by momentarily not drawing power from PV#2, the capacitor C may be recharged and so PV#2 may at some future time be suitable to draw upon again, at least momentarily. The rankings may be as simple and a binary ranking (e.g. ready/not ready, YES/NO), or based on the power output value PP, or based on VP relative to VP(MPP), and so be ordered from highest to lowest value.

Step 320, SELECT PV DEVICES, may include selecting a combination ofPV blocks according to the instantaneous power ratings or the power output value PP of each of the plurality of PV blocks 14. For example, the PV block with the highest power output value PP could be selected first, the PV block with the second highest power output value PP could be selected second, and so on until enough PV blocks have been selected to output the bridge voltage BV that is desired. The PV blocks selected may be operated into the connected mode, while those not selected may be operated into the bypass mode. It should be appreciated that this process of ranking and selecting according to ranking may naturally shuffle the PV blocks drawn upon, including changing the combination of PV blocks being used at any instant within a half cycle of the inverter 30 generating a sinusoidal waveform. It should be further appreciated that this change in selected PV blocks may not necessarily be directed at changing the value of the inverter voltage IV, but directed at changing the combination of PV blocks to those that will be operating closest to the MPP of each PV block.

Step 330, OPERATE POWER SWITCH, may include operating the plurality of power switches (the power switch 32) in a manner effective to combine the block voltages (e.g. V1, V2, ...Vn) output from each of the selected PV blocks series-wise to output a bridge voltage BV that influences the inverter voltage IV to correspond to the grid voltage GV. Step 330 may also include operating the plurality of power switches in a manner effective to draw power from the selected PV blocks at a rate approximately equal the maximum power point MPP of each of the selected PV blocks. For example, each power switch may be operated to a bypass state where the block voltage output by the corresponding PV block does not contribute to the bridge voltage BV or the inverter voltage IV, or operated to connected state where the block voltage output by the corresponding photovoltaic block contributes to the bridge voltage BV, as described above.

Step 330 may include pulse width modulating one or more of the selected blocks to incrementally adjust the inverter voltage IV to a desired value, for example 200V (Fig. 4), where three PV blocks are used to pulse width modulate the bridge voltage BV between a value that would be realized if all the selected PV blocks were operated to the connected mode and output a bridge voltage BV of about 260V, and a value that would be realized if all but one of the selected PV blocks were operated to the connected mode to output a bridge voltage of about 170V. By way of example and not limitation, the pulse width modulation could be provided by a hysteresis circuit (not shown) known to those in the art, or could be controlled by the controller 22 or the processor 34. In general, the hysteresis circuit operates by operating a power switch (e.g. power switch 32) to the bypass state when the inverter current II is greater than a desired current value II (Fig. 5) corresponding to the grid voltage GV by more than a first hysteresis value, for example greater than the desired current value by one Ampere (1A). Once the power switch 32 is operated to the bypass state, the bridge voltage BV and the inverter current II will begin to decrease. Accordingly, the hysteresis circuit may operate the power switch 32 to the connected state when the solar panel current value IP is less than the desired current value by an amount greater than a second hysteresis value, for example 1A. It is contemplated that hysteresis control could be based on a voltage value instead of current value, particularly if the system 10 is operating as a stationary power source as opposed to back-feeding a power distribution network

Fig. 4 illustrates a non-limiting example of the inverter voltage IV waveform characterized as a 50Hz sinusoidal signal, and a corresponding example of the bridge voltage BV waveform that may to generate the inverter voltage illustrated. Note that each stepped block of pulse with modulated signal illustrates how pulse width modulation of the bridge voltage BV cooperates with the inductor I to generate a smooth inverter voltage IV to a value comparable to the average of the bridge voltage BV. This pulse width modulation stands in contrast to the prior art techniques presented in the background of this document.

Fig. 5 illustrates a non-limiting example of a desired inverter output current ID waveform and the inverter current II that may generate the inverter voltage IV illustrated. An example of an upper hysteresis limit 50 and lower hysteresis limit 52 are illustrated that may determine the first hysteresis value the second hysteresis value described above.

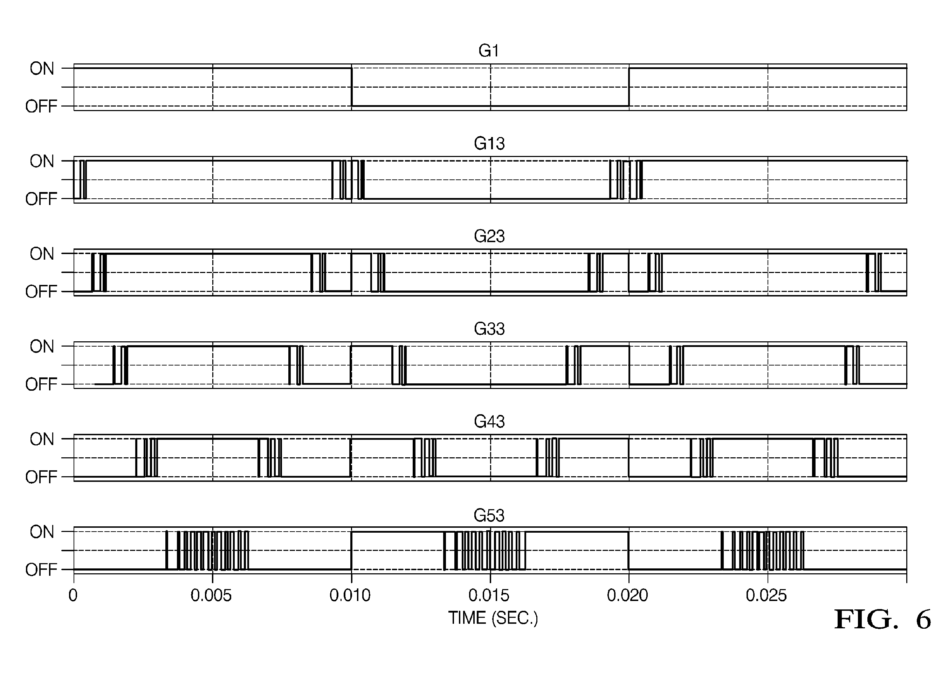

Fig. 6 illustrates a non-limiting example of signals present in the control signals 24 sent to the PV blocks 14 that could be used to generate the waveforms illustrated in Figs. 4 and 5. For this example, the system 10 or inverter 30 illustrated in Fig. 1 has five PV blocks: PV#1, PV#2, PV#3, PV#4, and PV#5. The waveform labeled g1 illustrates a typical g1 signal received by all of the PV blocks 14 that is high or ON when a positive bridge voltage BV is desired, and is low or OFF when a negative bridge voltage BV is desired. It should be recognized that g1 corresponds to the gate signal of Q1 (Fig. 2), and that the gate signal of Q4 will in general be the opposite or complement of the gate signal of Q1.

The waveform labeled g13 illustrates a g3 signal received by the first PV block 16 (PV#1). Similarly, the waveform labeled g23 illustrates a g3 signal received by the second PV block 18 (PV#2). Accordingly, the waveforms labeled g33, g43, and g53 each illustrate a g3 signal received by PV#3, PV#4, and PV#5, respectively. As the desired bridge voltage BV illustrated in Fig. 4 increases, each PV block is progressively added to the combination of voltages that determine BV by first pulse width modulating a PV block followed by keeping that PV block on and progressively adding a second PV block by pulse width modulating that block. In this example the PV blocks are progressively added in the order suggested only for the purpose of simplifying the explanations. However it should be recognized that the PV blocks could be added in any order. For example the waveform labeled g13 and g43 could be swapped so that PV#4 was the initial PV block used after time zero (0 seconds), and PV#1 would not be used until after about time 0.003 seconds.

As previously explained, the PV blocks 14 are preferably ranked according to a power rating of each block so that the initial block used typically has the highest power rating, for example, the PV block with a solar panel voltage value VP that is greater than it's VP(MPP) by the greatest amount. Furthermore, it should be understood that the power rating based ranking of the PV blocks 14 can change at any instant in time, including in the middle of generating a half-wave between time 0 seconds and time 0.001 seconds. For example, if the load of the grid 12 caused the power rating of PV#1 to fall so that the power point of PV#1 shifted to a power point undesirably removed from the maximum power point MPP, then the system 10 or inverter 30 may shuffle the ranking of the PV block so that, for example, at time 0.025 seconds the ranking was such that PV#1 was operated to a bypass mode, and PV#5 was operated to a connected mode to replace the contribution to the bridge voltage BV formerly made by PV#1.

In view of the description above, the waveforms in Fig. 6 may be interpreted as suggesting that the power ranking of PV#1 is always greater than the power ranking of PV#2, which is always greater than the power ranking of PV#3, and so on, because of the order in which the PV blocks 14 are used. However, it should be appreciated that if the power ranking and the VP(MPP) of each of the PV blocks 14 were substantially equal, then drawing power from particular PV block may change the power rating by an amount effective to cause that particular PV block to be ranked last or near last. This condition is expected to be common when solar panels are equally illuminated and manufacturing variation of the solar panels is minimized. In this case, the waveforms for g13, g23, g33, g43, and g53 would appear at first glance to be randomized and interchangeable. Upon closer inspection it would be seen that, for example, when the bridge voltage BV is about 200 Volts (Fig. 4), and so three PV blocks are likely needed to generate the bridge voltage BV, the three PV blocks selected would change or be swapped every PWM cycle. This swapping would occur whether the PWM cycle was hysteretic controlled based on, for example, the inverter current II, or was a fixed-frequency type PWM control known in the art. A hysteretic controlled PWM cycle is believed to be advantageous because the variable PWM frequency helps to spread electromagnetic emissions across the electromagnetic spectrum, and is relatively simple to implement.

Accordingly, a photovoltaic system 10, a cascaded multilevel inverter 30 for the system 10, and a method 300 of operating a cascaded multilevel inverter to transfer electrical power from a plurality of photovoltaic cells onto an electrical power distribution grid is provided. Power point ranking is used to shuffle or change which of a plurality of solar panels, each formed by a portion of the plurality of photovoltaic cells, is relied upon to contribute to outputting electrical energy by the system 10 or inverter 30. the selection of which solar panels are used is made based on a desire to have each solar panel's operating point to be at or near the maximum power point (MPP) of the panel. It was recognized that an any instant the operating point of a solar panel can change due to, for example, the amount of power being drawn from the solar panel. The system 10, inverter 30, and method 300 are configured so that at any instant in time the solar panels being relied upon can be changed or swapped or shuffled so that each solar panel operates at a maximum power point. As such, system 10, inverter 30, and the solar panels as a group are operated at maximum output power.

While this invention has been described in terms of the preferred embodiments thereof, it is not intended to be so limited, but rather only to the extent set forth in the claims that follow.

## Claims

1. A method (300) of operating a cascaded multilevel inverter (30) to transfer electrical power from a plurality of photovoltaic cells (PV#1, PV#2, PV#n) onto an electrical power distribution grid (12), wherein one or more of the plurality of photovoltaic cells is coupled to one of a plurality of power switches (32, Q1, Q2, Q3, Q4) to form a plurality of photovoltaic blocks (16, 18, 20), wherein the plurality of power switches are interconnected such that a block voltage (V1, V2, Vn) output by each photovoltaic block can be selectively combined series-wise to generate an inverter voltage (IV) corresponding to a grid voltage (GV) of the electrical power distribution grid (12), said method (300) comprising:
determining (310) a power rating for each of the plurality of photovoltaic blocks;
selecting (320) a combination of photovoltaic blocks based on the power ratings; and
operating (330) the plurality of power switches in a manner effective to combine the block voltage output from each of the selected photovoltaic blocks series-wise to output an inverter voltage (IV) substantially equal to the grid (GV) voltage.

2. The method (300) in accordance with claim 1, wherein the grid voltage is characterized as a sinusoidal waveform originating from one of a power distribution network and an internal sinusoidal signal generator.

3. The method (300) in accordance with claim 1, wherein determining a power rating includes determining a maximum power point of a photovoltaic block.

4. The method (300) in accordance with claim 3, wherein, operating the plurality of power switches includes operating in a manner effective to draw power from the selected photovoltaic blocks at a rate approximately equal the maximum power point.

5. The method (300) in accordance with claim 1, wherein determining a power rating is based on an operating point change of a photovoltaic block.

6. The method (300) in accordance with claim 1, wherein the method (300) includes ranking each of the plurality of photovoltaic blocks according to the power rating.

7. The method (300) in accordance with claim 1, wherein the power rating of a photovoltaic block is determined based on a power output value of power output by the photovoltaic block.

8. The method (300) in accordance with claim 1, wherein each power switch (32) is operable to a bypass state where the block voltage output by the corresponding photovoltaic block does not contribute to the inverter voltage, and operable to connected state where the block voltage output by the corresponding photovoltaic block contributes to the inverter voltage, wherein operating the plurality of power switches includes operating a power switch to the bypass state when the inverter voltage is greater than the grid voltage by more than a first hysteresis value, and operating the power switch to the connected state when the inverter voltage is less than the grid voltage by more than a second hysteresis value.

9. The method (300) in accordance with claim 1, wherein each power switch (32) is operable to a bypass state where the block voltage output by the corresponding photovoltaic block does not contribute to the inverter voltage, and operable to connected state where the block voltage output by the corresponding photovoltaic block contributes to the inverter voltage, wherein operating the plurality of power switches includes operating a power switch to the bypass state when inverter current is greater than a desired current value by more than a first hysteresis value, and operating the power switch to the connected state when the inverter current is less than the desired current value by more than a second hysteresis value.

10. A cascaded multilevel inverter (30) configured to transfer electrical power from a plurality of photovoltaic cells (PV#1, PV#2, PV#n) onto an electrical power distribution grid (12), said inverter (30) comprising:
a plurality of power switches (32, Q1, Q2, Q3, Q4), wherein each power switch is configured to be coupled to one or more of the plurality of photovoltaic cells to form a plurality of photovoltaic blocks (16, 18, 20), wherein the plurality of power switches are interconnected such that a block voltage (V1, V2, Vn) output by each photovoltaic block can be selectively combined series-wise to generate an inverter voltage (IV) corresponding to a grid voltage (GV) of the electrical power distribution grid (12); and
a controller (22) comprising an input (38) configured to receive signals effective to determine a power rating for each of the plurality of photovoltaic blocks, a processor (34) configured to select a combination of photovoltaic blocks based on the power ratings, and an output (44) configured to send signals effective to operate the plurality of power switches in a manner effective to combine the block voltage output by each of the selected photovoltaic blocks series-wise to output an inverter voltage substantially equal to the grid (12) voltage.

11. The inverter (30) in accordance with claim 10, wherein each power switch (32) comprises an H-bridge arrangement of solid-state switches.

12. The inverter (30) in accordance with claim 10, wherein the input is configured to determine an output voltage and output current of the one or more of a plurality of photovoltaic cells coupled to a power switch (32).

13. The inverter (30) in accordance with claim 10, wherein the inverter (30) further comprises a current sensor (36) configured to detect a solar panel (28) current of a photovoltaic block.

14. A photovoltaic system (10) configured to transfer electrical power onto an electrical power distribution grid (12), said system (10) comprising:
a plurality of photovoltaic cells (PV#1, PV#2, PV#n);
a plurality of power switches (32, Q1, Q2, Q3, Q4), wherein each power switch is configured to be coupled to one or more of the plurality of photovoltaic cells to form a plurality of photovoltaic blocks(16, 18, 20), wherein the plurality of power switches are interconnected such that a block voltage (V1, V2, Vn) output by each photovoltaic block can be selectively combined series-wise to generate an inverter voltage (IV) corresponding to a grid voltage (GV) of the electrical power distribution grid (12); and
a controller (22) comprising an input (38) configured to receive signals effective to determine a power rating for each of the plurality of photovoltaic blocks, a processor (34) configured to select a combination of photovoltaic blocks based on the power ratings, and an output (44) configured to send signals effective to operate the plurality of power switches in a manner effective to combine the block voltage output by each of the selected photovoltaic blocks series-wise to output an inverter voltage substantially equal to the grid voltage.
